# EUROPEAN PATENT APPLICATION

(11) **EP 4 760 898 A1**
(43) Date of publication of application: **17.06.2026**
(21) Application number: 24917292.5
(22) Date of filing: 22.11.2024
(51) Int. Cl.: H01M 50/167, H01M 50/152, H01M 50/107, H01M 50/213

(54) **CYLINDRICAL SECONDARY BATTERY**

(30) Priority: 12.01.2024 KR 20240005616
(71) Applicant: LG Energy Solution, Ltd., Seoul 07335 (KR)
(72) Inventor: NOH, Jae Kyo, Daejeon 34122 (KR)
(74) Representative: Goddar, Heinz J.
(86) International application number: PCT/KR2024/018617
(87) International publication number: WO 2025/150695

(57) **Abstract**

The present disclosure relates to a cylindrical secondary battery including a cylindrical can configured to accommodate an electrode assembly inside, and having a beading portion protruded inwards at a part located above the accommodated electrode assembly; and a top cap having a disc shape and mounted on the beading portion of the can, wherein in a state in which the top cap is mounted on the beading portion, an upper end of the can is bent to form a crimping portion so as to cover an upper surface of the top cap, and wherein the crimping portion has a notch cut to a preset depth to divide the crimping portion into a plurality of segments. The present disclosure having the above-described configuration has the notch in the crimping portion to reduce the thickness, so as to induce a rupture along the notched part when the pressure in the can increases. Accordingly, as the crimping portion may be deformed by lower pressure, the top cap may be separated from the can more quickly. Therefore, it may be possible to prevent sidewall rupture of the can.

## Description

### TECHNICAL FIELD

The present application claims priority to Korean Patent Application No. 10-2024-0005616 filed on January 12, 2024 in the Republic of Korea, the disclosure of which is incorporated herein by reference.

The present disclosure relates to a cylindrical secondary battery, and more particularly, to a cylindrical secondary battery in which a top cap coupled to the top of a can is separated quickly when the internal pressure increases due to gas generated in the can, thereby preventing sidewall rupture of the can.

### BACKGROUND ART

Secondary batteries used in a wide range of applications including different types of digital devices and transportation means such as vehicles can be repeatedly charged and discharged. Research and development is continuously being conducted to increase efficiency and improve safety.

Secondary batteries may be variously classified according to the shape of a battery case or the material of an electrode assembly, but when classified according to the shape of the battery case, cylindrical, prismatic and pouch types are the most common.

Among them, a cylindrical secondary battery has a structure in which an electrode assembly 30 is placed in a hollow cylindrical can 10 having an open top and a closed bottom, and a top cap 20 is secured and coupled to the top of the can 10.

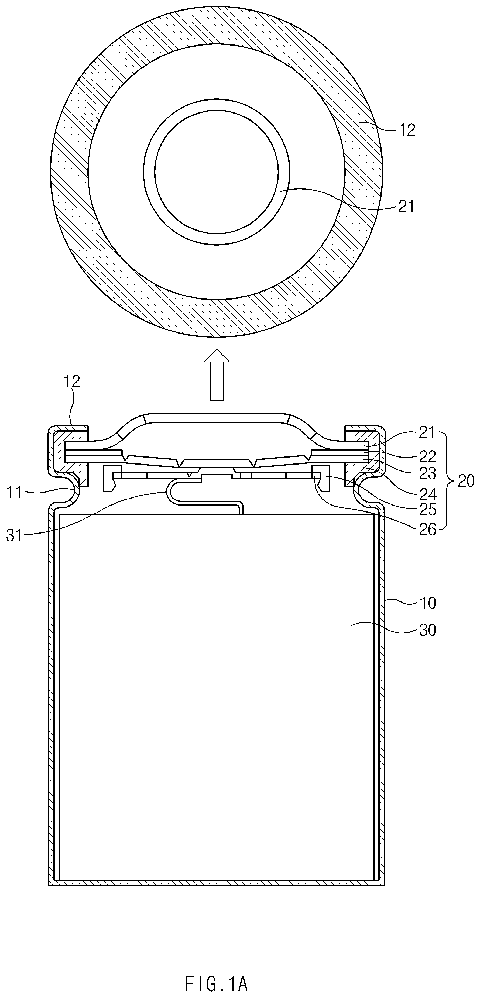

Referring to FIG. 1A showing a longitudinal cross-sectional view (lower picture) and a top view (upper picture) of the conventional cylindrical secondary battery, the can 10 is, at the bottom surface, connected to the electrode assembly 30 through a negative electrode tab (not shown), and the top cap 20 is connected to a positive electrode (not shown) of the electrode assembly 30.

The can 10 has a (pipe-shaped) sidewall surface extended upward from the bottom surface along the circumference. When the electrode assembly 30 is mounted, the upper part of the sidewall surface of the can 10 is processed to form a beading portion 11 such that it is protruded inwards.

Additionally, the top cap 20 is mounted on the beading portion 11. Additionally, a predetermined portion of the upper part of the can 10 above the beading portion 11 is bent (crimped) in a direction toward the center to form a crimping portion 12 so as to secure the top cap 20.

Meanwhile, to suppress explosion and ignition, the top cap 20 includes a cap 21 used as a positive terminal, a positive temperature coefficient thermistor (PTC) 22 in which in the event of overcurrent, resistance increases, which reduces the amount of current, a vent portion 23 that ruptures to vent gas when the internal gas pressure increases, a current interrupt device (CID) 26 that is connected to a positive electrode tab 31 and ruptures to interrupt the current when the internal pressure increases, and gaskets 24, 25 to insulate each component.

However, when gas is generated in the can 10, in the event that the vent portion 23 fails to rupture or a large amount of gas or an internal explosion suddenly occurs, the sidewall of the can 10 may destroy, causing explosion propagation to adjacent cylindrical secondary batteries.

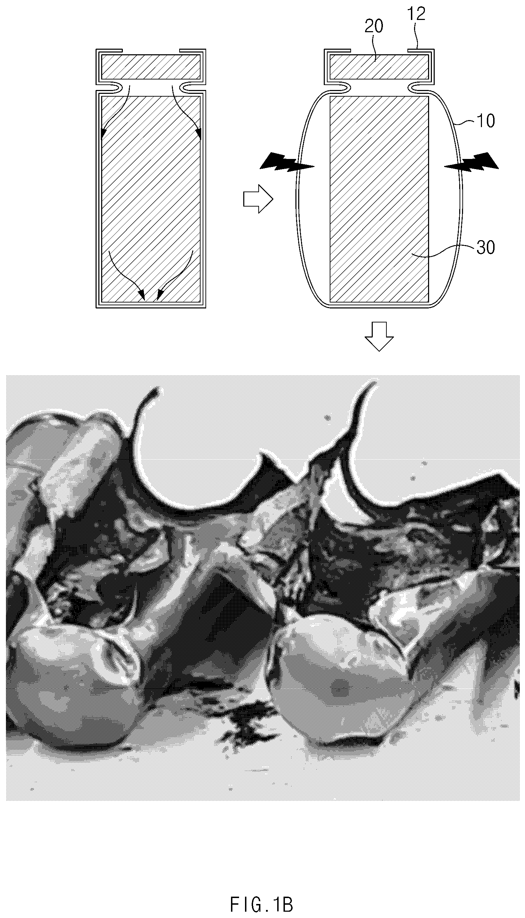

That is, referring to FIG. 1B showing the destroyed sidewall of the can and the consequential explosion, when an electrolyte solution in the can 10 evaporates, producing gas in a tremendous amount (beyond the capacity of the vent portion) and the internal pressure increases or an internal explosion occurs, the top cap 20 experiences an upward force due to the internal pressure, and accordingly the crimping portion 12 experiences a force in the unfolding direction. However, in the case where the crimping portion 12 is not properly unfolded and the top cap 20 is not separated, the pressure in the can 10 may destruct the sidewall of the can 10.

Generally, a few ten to thousand cylindrical secondary batteries are used to manufacture a battery module or a battery pack. Therefore, when sidewall rupture or side rupture occurs in any one cylindrical secondary battery, explosive force may be transmitted to adjacent secondary batteries, causing explosion propagation.

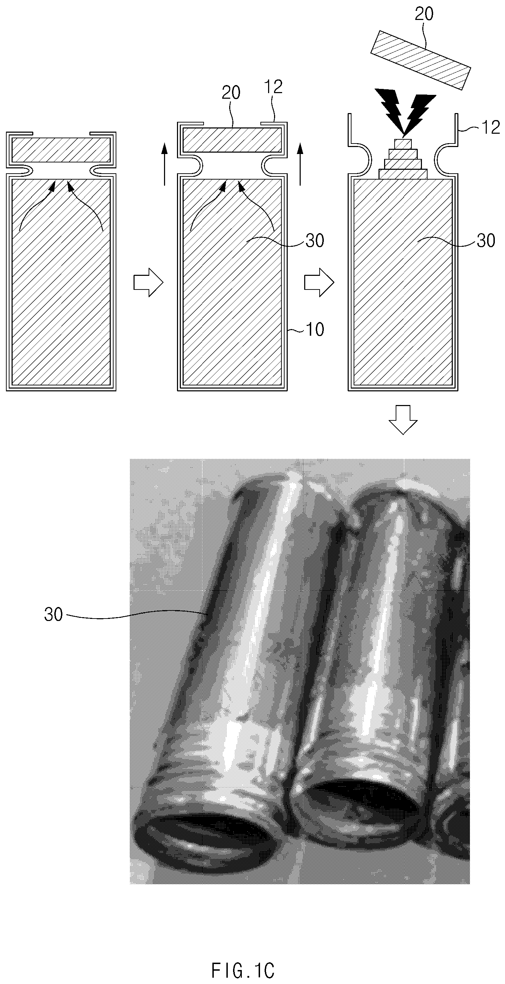

That is, as shown in FIG. 1C showing that the crimping portion 12 is unfolded and the top cap 20 is separated, in the event that an internal explosion occurs due to the internal pressure rise, when the top cap 20 is separated from the can 10 before the sidewall rupture of the can 10 occurs, the pressure in the can may be reduced quickly, thereby (changing the explosion direction in which gas is vented) preventing explosion propagation to adjacent secondary batteries and reducing damage.

### SUMMARY

### TECHNICAL PROBLEM

The present disclosure is designed to solve the above-described problem, and therefore the present disclosure is directed to provide a cylindrical secondary battery in which when the internal pressure of a can increases, a top cap is separated from a crimping portion quickly before sidewall rupture (side rupture) occurs, in order to prevent explosion propagation to adjacent secondary batteries.

### TECHNICAL SOLUTION

A cylindrical secondary battery provided by the present disclosure to achieve the above-described objective includes a cylindrical can configured to accommodate an electrode assembly inside, and having a beading portion protruded inwards at a part located above the accommodated electrode assembly; and a top cap having a disc shape and mounted on the beading portion of the can, wherein in a state in which the top cap is mounted on the beading portion, an upper end of the can is bent to form a crimping portion so as to cover an upper surface of the top cap, and wherein the crimping portion has a notch cut to a preset depth to divide the crimping portion into a plurality of segments. That is, the crimping portion is divided into a notched part and an unnotched part, and the segments refer to the unnotched part of the crimping portion.

The notch is formed in a straight line shape, and disposed in a direction that goes off a center of the top cap when extended in a length direction.

An outer circumference of the crimping portion forms an outer boundary line, an inner circumference forms an inner boundary line, and the notch forms an oblique line between the outer boundary line and the inner boundary line.

An angle between an imaginary line connecting the center of the top cap to a point on the inner boundary line where the notch is formed and the notch ranges from 40° to 60°.

The crimping portion has 8 to 14 notches.

In this instance, the notch may include a plurality of notches arranged at a regular interval or an irregular interval. That is, the notch may include a plurality of notches arranged at such an interval that a certain interval is different from another interval.

A width of the notch is smaller than a length of the notch. In an embodiment provided by the present disclosure, the width of the notch ranges from 0.5 mm to 1.5 mm and the length of the notch ranges from 2 mm to 4 mm. Additionally, the plurality of notches is formed with an equal width and length.

Furthermore, a thickness of the notched part ranges from 20% to 50% of a thickness of the segment. When the thickness of the segment is 1 mm, the thickness of the notched part may range from 0.2 mm to 0.5 mm.

In addition, a plurality of cylindrical secondary batteries having the above-described technical feature may be electrically connected to each other to provide a secondary battery module.

### ADVANTAGEOUS EFFECTS

The present disclosure having the above-described configuration has the notch in the crimping portion to reduce the thickness, so as to induce a rupture along the notched part when the pressure in the can increases. Accordingly, as the crimping portion may be deformed by lower pressure, the top cap may be separated from the can more quickly. Therefore, it may be possible to prevent sidewall rupture of the can.

In addition, in the present disclosure, as the adjacent segments are not completely separated (the adjacent segments are connected by the remaining part after the notch is formed), it may be possible to preventing a reduction in clamping strength of the top cap in normal condition in which the pressure in the can is low.

The notch is formed in a straight line shape, and disposed in a direction that goes off the center of the top cap when extended in the length direction (i.e., disposed in a helical shape), so when any one of the segments is unfolded (vertically) by rupture at the notched part, the adjacent segments may be unfolded in a sequential order.

In this instance, as the plurality of notches is arranged at a regular interval, it may be possible to secure the top cap with uniform pressure.

### BRIEF DESCRIPTION OF THE DRAWINGS

FIG. 1A is a diagram showing a longitudinal cross-sectional view (lower picture) and a top view (upper picture) of a conventional cylindrical secondary battery.
FIG. 1B is a diagram showing a sidewall rupture of a can and its consequential explosion.
FIG. 1C is a diagram showing an unfolded crimping portion and a separated top cap.
FIG. 2 is a diagram showing a longitudinal cross-sectional view (lower picture) and a top view (upper picture) of a cylindrical secondary battery provided as a first embodiment of the present disclosure.
FIG. 3 is an enlarged view of an area in which a crimping portion is located in FIG. 2.
FIG. 4 is a cross-sectional view of FIG. 3, taken along the line Z-Z'.
FIG. 5 is a diagram of a second embodiment of the present disclosure, showing notches arranged at different intervals.

### DETAILED DESCRIPTION

Hereinafter, the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited to the disclosed embodiments.

To clearly describe the present disclosure, an irrelevant description is omitted, and the identical reference numerals are affixed to the identical or similar elements throughout the specification.

Additionally, the terms or words used in the specification and the appended claims should not be construed as limited to general and dictionary meanings and rather, should be interpreted based on the meanings and concepts corresponding to the technical aspect of the present disclosure on the basis of the principle that the inventor is allowed to define the terms appropriately for the best explanation.

To solve the problem of the conventional structure having a sidewall rupture risk of the can 10, causing explosion propagation (to adjacent cylindrical secondary batteries), the present disclosure relates to a cylindrical secondary battery in which when the pressure in the can 10 increases, the crimping portion 12 is vertically unfolded (deformed) quickly to induce separation of the top cap 20 as shown in FIG. 1C. Hereinafter, the embodiments of the present disclosure will be described in more detail with reference to the accompanying drawings.

### First embodiment

The cylindrical secondary battery provided in this embodiment includes the can 10 and the top cap 20, wherein the crimping portion 12 on top of the can 10 has a notch 14 cut to a predetermined depth.

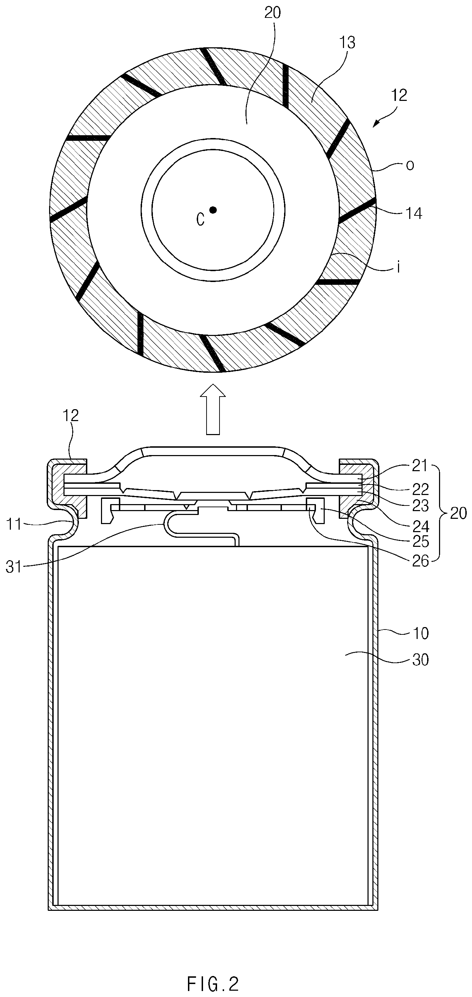

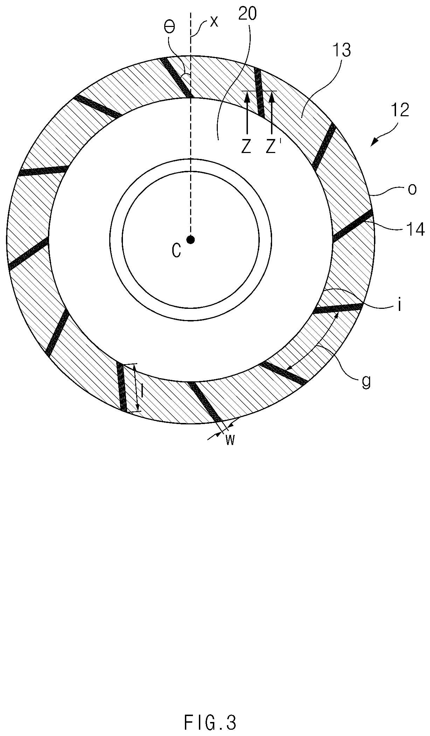

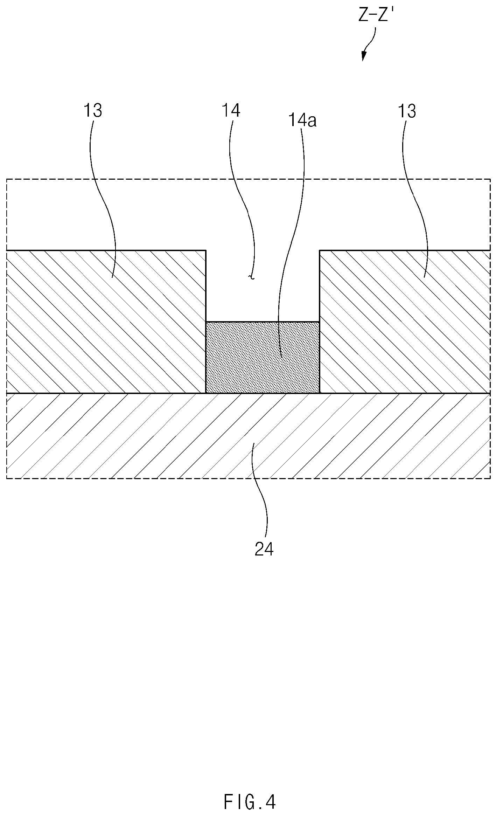

FIG. 2 is a diagram showing a longitudinal cross-sectional view (lower picture) and a top view (upper picture) of the cylindrical secondary battery provided as the first embodiment of the present disclosure, FIG. 3 is an enlarged view of the area in which the crimping portion 12 is located in FIG. 2, and FIG. 4 is a cross-sectional view of FIG. 3, taken along the line Z-Z'.

Referring to FIGS. 2 to 4, the can 10 is formed in a hollow cylindrical shape, and has an open top and a closed bottom.

That is, the can 10 is provided with a sidewall surface extended upward from the bottom surface along the circumference. Additionally, when a negative electrode tab (not shown) of the electrode assembly 30 welded to the bottom surface of the can is mounted inside the can 10, the upper part of the sidewall surface of the can 10 is processed to form the beading portion 11 such that it is protruded inwards.

Additionally, the top cap 20 is mounted on the beading portion 11. The top cap 20 has a disc shape as a whole and is provided in a size that is large enough to be mounted on the beading portion 11 of the can 10.

In addition to the cap 21 used as the positive electrode terminal, the top cap 20 includes safety devices to suppress explosion and ignition. The safety devices may include the positive temperature coefficient thermistor (PTC) 22 in which in the event of overcurrent, resistance increases, which reduces the amount of current, the vent portion 23 that ruptures to vent gas when the internal gas pressure increases, and the current interrupt device (CID) 26 that is connected to the positive electrode tab 31 and ruptures to interrupt the current when the internal pressure increases. In addition, the top cap 20 further includes the gaskets 24, 25 to insulate each component.

Additionally, a predetermined portion of the upper part of the can 10 above the beading portion 11 is bent (crimped) around the top cap 20 in a direction toward the center to form the crimping portion 12 so as to secure the top cap 20.

In addition, as shown in FIGS. 2 to 4, in this embodiment, the crimping portion 12 has the notch 14 cut to a preset depth to divide into a plurality of segments 13. That is, the crimping portion 12 is divided into a notched part or an area in which the notch 14 is formed and an unnotched part or an area in which the notch 14 is not formed, and the segments 13 refer to the unnotched part of the crimping portion 12.

The notch 14 is formed in a straight line shape, and disposed in a direction that goes off the center C of the top cap 20 when extended in the length direction. As shown in FIG. 3, the notch 14 forms an oblique line between an outer boundary line (o) or the outer circumference of the crimping portion 12 and an inner boundary line (i) or the inner circumference of the crimping portion 12.

Additionally, referring to FIG. 4 showing an enlarged cross-sectional view of the notched part, the crimping portion 12 presses down the gasket 24 or an insulator to secure and hold the top cap 20, and is divided into the plurality of individual segments 13 by the notch 14.

Here, the notch 14 refers to a cut made to the predetermined depth in the crimping portion 12, and the remaining part (14a: i.e., the notched part) in the area in which the notch 14 is formed connects the adjacent segments 13. That is, this part 14a connecting the adjacent segments 13 plays a role in holding the adjacent segments 13 together when the crimping portion 12 secures the top cap 20.

In this embodiment, the thickness of the notched part 14a in which the notch 14 is formed ranges from 20% to 50% of the thickness of the segment 13 (i.e., the vertical length on the basis of FIG. 4). For example, when the thickness of the segment 13 is 1 mm, the thickness of the notched part 14a may range from 0.2 mm to 0.5 mm, and when the thickness of the segment 13 is 0.5 mm, the thickness of the notched part 14a may range from 0.1 mm to 0.25 mm.

In this embodiment, an angle (θ) between an imaginary line (x) connecting the center C of the top cap 20 to a point on the inner boundary line (i) where the notch 14 is formed and the corresponding notch is in a range between 40° and 60°, and the crimping portion 12 has eight to fourteen notches 14.

Additionally, a width (w) of the notch 14 is smaller than a length (1) of the notch 14. Although the width and size of the notch 14 may be adjusted according to the size of the can 10, in the embodiment provided by the present disclosure, the width (w) of the notch 14 ranges from 0.5 mm to 1.5 mm, and the length (1) of the notch 14 ranges from 2 mm to 4 mm.

In addition, the plurality of notches 14 is formed with the equal width (w) and length (1) so that when deformation (unfolding) occurs in any one segment 13, the adjacent segments 13 may be deformed in a sequential order by the equal pressure applied.

Additionally, in this instance, the plurality of notches 14 is arranged in a regular interval (g).

### Second embodiment

Meanwhile, a variety of modifications may be made to the notches 14 of the cylindrical secondary battery provided in the first embodiment.

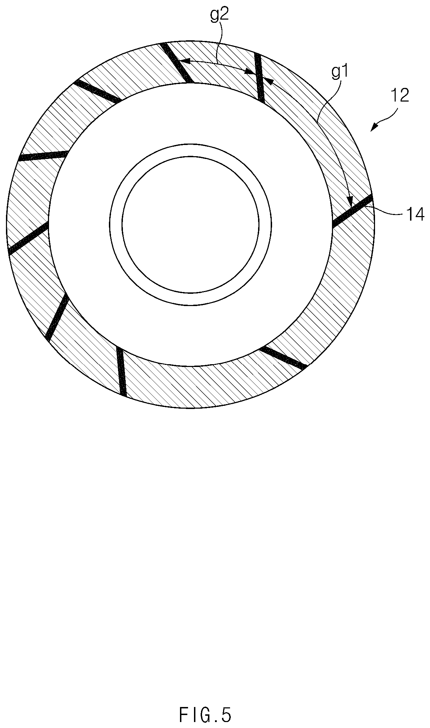

For example, as the second embodiment of the present disclosure, as shown in FIG. 5 showing the notches 14 arranged at different intervals (g1, g2), the plurality of notches 14 may be arranged at such an interval that one interval (g1) may be different from the other interval (g2).

Alternatively, only some of the plurality of notches 14 may have a larger width or a different angle of inclination.

In addition, according to the position and direction in which the can 10 is disposed, in order to induce separation of the top cap 20 in a specific direction, the notches 14 may be arranged with higher density in a specific area or the notch 14 may not be formed in a specific area.

Additionally, in the present disclosure, a plurality of cylindrical secondary batteries having the technical feature provided in the first embodiment and/or the second embodiment above may be electrically connected to manufacture a secondary battery module.

The present disclosure having the above-described configuration has the notch 14 in the crimping portion 12 to reduce the thickness, so as to induce a rupture along the notched part 14a when the pressure in the can increases. Accordingly, as the crimping portion 12 may be deformed by lower pressure, the top cap 20 may be separated from the can 10 more quickly. Therefore, it may be possible to prevent sidewall rupture of the can 10.

In addition, in the present disclosure, as the adjacent segments 13 are not completely separated (they are connected by the remaining part after the notch is formed), it may be possible to preventing a reduction in clamping strength of the top cap 20 in normal condition in which the pressure in the can 10 is low.

The notch 14 is formed in a straight line shape, and disposed in a direction that goes off the center C of the top cap 20 when extended in the length direction (i.e., disposed in a helical shape), so when any one of the segments 13 is unfolded (vertically) by rupture at the notched part 14a, the adjacent segments 13 may be unfolded in a sequential order.

In this instance, as the plurality of notches 14 is arranged at a regular interval, it may be possible to secure the top cap with uniform pressure.

Although the present disclosure has been hereinabove described with regard to a limited number of embodiments and drawings, the present disclosure is not limited thereto, and a variety of modifications and change may be made thereto by persons having ordinary skill in the technical field pertaining to the present disclosure within the technical aspect of the present disclosure and the appended claims and their equivalent scope.

[List of Reference Numerals]
10: Can
11: Beading portion
12: Crimping portion
13: Segment
14: Notch
14a: Notched part
20: Top cap
30: Electrode assembly

## Claims

1. A cylindrical secondary battery comprising:
a cylindrical can configured to accommodate an electrode assembly inside, and having a beading portion protruded inwards at a part located above the accommodated electrode assembly; and
a top cap having a disc shape and mounted on the beading portion of the can,
wherein in a state in which the top cap is mounted on the beading portion, an upper end of the can is bent to form a crimping portion so as to cover an upper surface of the top cap, and
wherein the crimping portion has a notch cut to a preset depth to divide the crimping portion into a plurality of segments.

2. The cylindrical secondary battery according to claim 1,
wherein the notch is formed in a straight line shape, and disposed in a direction that goes off a center of the top cap when extended in a length direction.

3. The cylindrical secondary battery according to claim 2,
wherein an outer circumference of the crimping portion forms an outer boundary line, and an inner circumference forms an inner boundary line, and
wherein the notch forms an oblique line between the outer boundary line and the inner boundary line.

4. The cylindrical secondary battery according to claim 3,
wherein an angle between an imaginary line connecting the center of the top cap to a point on the inner boundary line where the notch is formed and the notch ranges from 40° to 60°.

5. The cylindrical secondary battery according to claim 3,
wherein the crimping portion has 8 to 14 notches.

6. The cylindrical secondary battery according to claim 3,
wherein the notch includes a plurality of notches arranged at a regular interval.

7. The cylindrical secondary battery according to claim 2,
wherein the notch includes a plurality of notches arranged at such an interval that a certain interval is different from another interval.

8. The cylindrical secondary battery according to claim 2,
wherein a width of the notch is smaller than a length of the notch.

9. The cylindrical secondary battery according to claim 8,
wherein the width of the notch ranges from 0.5 mm to 1.5 mm and the length of the notch ranges from 2 mm to 4 mm.

10. The cylindrical secondary battery according to claim 8,
wherein a plurality of notches is formed with an equal width and length.

11. The cylindrical secondary battery according to claim 1,
wherein a thickness of a notched part ranges from 20% to 50% of a thickness of the segment.

12. A secondary battery module comprising a plurality of cylindrical secondary batteries according to any one of claims 1 to 11 electrically connected to each other.
